(19) Europäisches Patentamt
European Patent Office
Office européen des brevets

(11) **EP 3 891 228 B1**

(12) **EUROPÄISCHE PATENTSCHRIFT**

(45) Veröffentlichungstag und Bekanntmachung des Hinweises auf die Patenterteilung:
**21.08.2024 Patentblatt 2024/34**

(21) Anmeldenummer: **19805672.3**

(22) Anmeldetag: **20.11.2019**

(51) Internationale Patentklassifikation (IPC):
***C09D 5/02*** *(2006.01)* ***C09D 7/43*** *(2018.01)*
***C09D 7/61*** *(2018.01)* ***C09D 7/40*** *(2018.01)*

(52) Gemeinsame Patentklassifikation (CPC):
**C09D 5/024; C09D 7/43; C09D 7/61; C09D 7/68;**
C08K 3/36

(86) Internationale Anmeldenummer:
**PCT/EP2019/081871**

(87) Internationale Veröffentlichungsnummer:
**WO 2020/114768 (11.06.2020 Gazette 2020/24)**

(54) **HYDROPHILES SILIZIUMDIOXID UND SILANOL HALTIGE WÄSSRIGE DISPERSION UND LACKZUBEREITUNG**

HYDROPHILIC SILICA AND AQUEOUS DISPERSION CONTAINING SILANOL AND PAINT PREPARATION

DISPERSION ET PRÉPARATION POUR LAQUE AQUEUSE CONTENANT DU DIOXYDE DE SILICIUM HYDROPHILE ET DU SILANOL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.12.2018 EP 18210927**

(43) Veröffentlichungstag der Anmeldung:
**13.10.2021 Patentblatt 2021/41**

(73) Patentinhaber: **Evonik Operations GmbH**
**45128 Essen (DE)**

(72) Erfinder:
- **MICHAEL, Günther**
**63791 Karlstein (DE)**
- **BAUERMANN, Peter**
**63110 Rodgau (DE)**
- **HERRWERTH, Sascha**
**63579 Freigericht (DE)**

(74) Vertreter: **Evonik Patent Association**
**c/o Evonik Industries AG**
**IP Management**
**Bau 1042A/PB 15**
**Paul-Baumann-Straße 1**
**45772 Marl (DE)**

(56) Entgegenhaltungen:
**EP-A1- 1 433 749**
**WO-A1-2012/062559**
**WO-A1-2017/009035**
**DE-A1- 10 225 125**
**DE-A1- 2 524 309**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Processed by Luminess, 75001 PARIS (FR)

## Beschreibung

Die vorliegende Erfindung betrifft basische wässrige Dispersionen enthaltend hydrophile Siliziumdioxidpartikel, ein Verfahren zur deren Herstellung und deren Verwendung in Lackzubereitungen.

Siliziumdioxid haltige wässrige Dispersionen werden oft für die Einstellung der Viskosität und anderer rheologischen Eigenschaften der wasserbasierten Lackformulierungen verwendet. Solche Dispersionen bestehen aus einer Vielzahl von verschiedenen Komponenten und sollen unter anderem fein und möglichst homogen verteilte Siliziumdioxidpartikel enthalten, einfach herstellbar, lagerstabil und mit diversen Komponenten der wasserbasierten Lackformulierungen kompatibel sein. Außerdem ist es vorteilhaft, wenn die Dispersionen einen hohen Gehalt an Siliziumdioxid aufweisen, weil dadurch die Transportkosten gesenkt werden können und bei der Einarbeitung in Lackdispersionen, die letzten nicht mit zu viel Wasser verdünnt werden.

In WO 2012/062559 A1 werden die wässrigen Dispersionen enthaltend hydrophobierte Siliziumdioxidpartikel beschrieben, die 5 - 15 Gew.-% Alkoholalkoxylat, 0.5 - 5 Gew.-% wenigstens eines Amins oder Aminoalkohols und bis zu 1 Gew.-% von N-Methylpyrrolidon umfassen. Solche Dispersionen werden durch Zugabe hydrophobierter Kieselsäuren wie beispielsweise AEROSIL® R 972 zu flüssigen Komponenten der Dispersion bei intensiver Vermischung hergestellt. Der Grad der Hydrophobie der eingesetzten hydrophobierten Kieselsäuren kann dabei mit der Methanolbenetzbarkeit bestimmt werden, die in diesem Fall vorzugsweise von 20 bis 80 Vol.-% Methanol in Methanol-Wasser Gemisch beträgt. Solche Dispersionen weisen eine niedrige Viskosität bei hoher Feststoffbeladung und eine gute Lagerstabilität auf. Die Herstellung solcher wässrigen Dispersionen enthaltend hydrophobierte Kieselsäuren und deren Einarbeitung in die wasserbasierten Lackformulierungen kann aber sehr anspruchsvoll sein. Die hydrophobierten Kieselsäuren können von Natur aus von Wasser nur mithilfe von entsprechenden Hilfsmitteln benetzt werden, wobei eine sehr intensive und relativ lange Vermischung notwendig ist und eine starke Schaumbildung erschwerend hinzukommt.

Die hydrophilen Kieselsäuren lassen sich bekanntlich mit Wasser hervorragend benetzen und können daher sehr einfach in eine wässrige Dispersion eingearbeitet werden. Allerdings zeigen die hydrophoben Kieselsäuren gegenüber den hydrophilen oft die besseren rheologischen Eigenschaften in wasserbasierten Lacksystemen. Außerdem sind die bekannten hydrophilen Kieselsäuren haltigen wässrigen Dispersionen mit vielen Lacksystemen unverträglich und weisen daher schlechte optische Eigenschaften der Lackfilme auf.

Die WO 2017/009035 A1 beschreibt ein Verfahren zur Herstellung einer wässrigen Siliziumdioxidhaltigen Dispersion bei einem pH Wert von mehr als 11, wobei die Dispersion bei einer Temperatur von 50 bis 95°C thermisch behandelt wird.

Die DE 10 2005 012409 A1 beansprucht eine wässrige Dispersion enthaltend ein teilhydrophobes Siliziumdioxid mit einer Methanolbenetzbarkeit von weniger als 20 Vol.-% Methanol in einem Methanol-Wasser Gemisch, wobei die Dispersion keine Amine aufweist.

Die technische Aufgabe der Erfindung ist es, eine lagerstabile hochgefüllte Siliziumdioxidhaltige Dispersion bereitzustellen, die einfach herstellbar und mit den wasserbasierten Lackformulierungen gut kompatibel ist, wobei die resultierenden wasserbasierten Lacksysteme gute optischen und rheologischen Eigenschaften aufweisen.

Darüber hinaus ist es wünschenswert, eine lagerstabile hochgefüllte Siliziumdioxidhaltige Dispersion bereitzustellen, die reduzierte bzw. keine Cyclooctamethyltetrasiloxan ($D_4$) -Mengen aufweist.

Der Gegenstand der Erfindung ist eine wässrige Dispersion, enthaltend

a. 50 - 80 Gew.-%, bevorzugt 55 - 75 Gew.-% Wasser,

b. 10 - 30 Gew.-%, bevorzugt 15 - 25 Gew.-% hydrophiles Siliziumdioxid,

c. 2 - 25 Gew.-%, wenigstens ein Alkoholalkoxylat der allgemeinen Formel $R^1O((CH_2)_mO)_nH$, wobei $R^1$ ein verzweigter oder unverzweigter Alkyl- oder Alkenylrest mit 10 - 25 C-Atomen, m = 2 oder 3 und n = 10 - 50 ist,

d. 0,1 - 20 Gew.-%, bevorzugt 0,5 - 5 Gew.-% ein Silanol erhalten durch Hydrolyse mindestens eines Dialkoxysilanes der allgemeinen Formel $R^2R^3Si(OR^4)_2$, wobei $R^2$, $R^3$ und $R^4$ jeweils ein verzweigter oder unverzweigter Alkyl- oder Alkenylrest mit 1 - 25 C-Atomen ist,

e. 0,5 - 4 Gew.-%, bevorzugt 1,5 -4,0 Gew.-% und besonders bevorzugt 2 - 3 Gew.-% wenigstens ein Amin und/oder einen Aminoalkohol mit einem Molekulargewicht von weniger als 500 g/mol,

f. 0,1 - 20 Gew.-%, mindestens ein Copolymer der allgemeinen Formel (I)

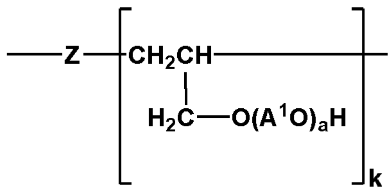

(I) ,

mit Z =

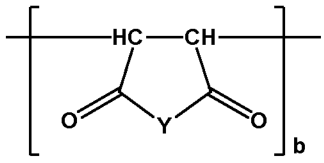

und/oder

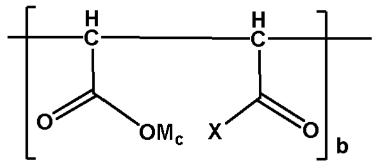

(Ia) (Ib)

mit

M = Wasserstoff, ein- oder zweiwertiges Metallkation, Ammoniumion, organischer Aminrest,

c = 1, oder für den Fall, dass M ein zweiwertiges Metallkation ist, c = 0,5

X = $-OM_c$ oder $-O-(O_pH_{2p}O)_q$ - $R^5$ mit

$R^5$ = H, aliphatischer Kohlenwasserstoffrest mit 1 bis 20 C-Atomen, cycloaliphatischer Kohlenwasserstoffrest mit 5 bis 8 C-Atomen, gegebenenfalls substituierter Arylrest mit 6 bis 14 C-Atomen,

p = 2 - 4, q = 0 -100, $-NHR^6$ und/oder $-NR^6_2$ mit $R^6 = R^5$ oder $-CO-NH_2$

Y = O, $NR^6$

$A^1$ = Ethylenrest, Propylenrest, iso-Propylenrest, Butylenrest,

b = 10 - 30, a= 0 - 50, k = 10 - 30, wobei die Summe b+k im Bereich von 20 - 60 liegt,

g. 0,1 - 6,0 Gew.-%, mindestens ein Polyethylenglycol und/oder Polypropylenglycol,

wobei alle Angaben zu Gewichtsprozenten sich auf die gesamte Dispersionsmasse beziehen und wobei sie einen pH Wert von <11 aufweist.

Vorteilhafterweise weist die erfindungsgemäße wässrige Dispersion reduzierte Mengen von Cyclooctamethyltetrasiloxan ($D_4$) bzw. kein Cyclooctamethyltetrasiloxan ($D_4$) auf. Cyclooctamethyltetrasiloxan ($D_4$) stellt aufgrund seiner gefährlichen Eigenschaften als persistenter, bioakkumulierbarer und toxischer Stoff eine Gefahr für die Umwelt dar.

In US 2008/0069753 A1 wird die Herstellung von hydrophoben Siliziumdioxidpartikel beschrieben, umfassend die Zugabe eines Alkoxysilans zur sauren wässrigen Dispersion einer hydrophilen Kieselsäure und nachfolgende Trocknung des erhaltenen Reaktionsgemisches. In den Vergleichsbeispielen wird weiterhin gezeigt, dass die Zugabe eines Alkoxysilans (Octyltriethoxysilan) zu einer wässrigen Dispersion enthaltend kolloidales Siliziumdioxid bei 70 °C in basischem Milieu (pH = 9,5) und nachfolgende Trocknung der resultierenden Dispersion ebenfalls zur Herstellung von hydrophoben Siliziumdioxids führt. Der Kohlenstoffgehalt der beiden, sowohl in saurem als auch in basischem Milieu hergestellten Kieselsäuren, unterscheidet sich kaum, was darauf hinweist, dass in beiden Fällen ähnliche Hydrophobierungsgrade erreicht werden.

Völlig überraschend und im Lichte der Offenbarung von US 2008/0069753 A1 unerwartet wurde gefunden, dass unter anderem die Einhaltung einer relativ geringen Reaktionstemperatur von < 40°C und Einstellung eines pH Wertes von <11 während der Zugabe von Alkoxysilan zur wässrigen Dispersion enthaltend eine hydrophile Kieselsäure

dazu führt, dass ein spezielles Gemisch umfassend eine immer noch hydrophile Kieselsäure und Hydrolyseprodukte von Alkoxysilan entsteht, das einzigartige Eigenschaften aufweist.

Ein weiterer Gegenstand der Erfindung ist dementsprechend ein Verfahren zur Herstellung einer wässrigen Siliziumdioxidhaltigen Dispersion umfassend Zugabe mindestens eines Dialkoxysilans der allgemeinen Formel $R^2R^3Si(OR^4)_2$, wobei $R^2$, $R^3$ und $R^4$ jeweils ein verzweigter oder unverzweigter Alkyl- oder Alkenylrest mit 1 - 25 C-Atomen ist, zu einem Gemisch enthaltend 50 - 80 Gew.-% Wasser und 10 - 30 Gew.-% hydrophiles Siliziumdioxid bei einem pH Wert der Dispersion von <11, wobei die resultierende Dispersion während und nach der Zugabe des Dialkoxysilans die Temperatur von 40 °C (sog. Silanisierungstemperatur) nicht überschreitet.

Bevorzugt liegt die Silanisierungstemperatur bei < 40°C, besonders bevorzugt bei < 30°C, äußerst bevorzugt < 25°C.

Überraschend konnte festgestellt werden, dass die Silanisierungstemperatur einen großen Einfluss auf die Bildung von toxischem Cyclooctamethyltetrasiloxan ($D_4$) hat.

Bei der erfindungsgemäßen gewählten Silanisierungstemperatur kann somit eine fließfähige Dispersion hergestellt und zudem Cyclooctamethyltetrasiloxan ($D_4$) reduziert bzw. sogar verhindert werden. Die Reduzierung und Vermeidung von toxischem $D_4$ stellt somit ein weiterer Vorteil des Verfahrens dar.

Die erfindungsgemäße Dispersion enthält hydrophiles Siliziumdioxid, bevorzugt in amorpher Form. Dieses Siliziumdioxid kann ein oder mehrere allgemein bekannte Typen von Kieselsäuren, wie die sogenannten Aerogele, Xerogele, Perlite, Fällungskieselsäuren oder pyrogene Kieselsäuren beinhalten. Bevorzugt enthält die erfindungsgemäße Dispersion Siliziumdioxid aus der Gruppe bestehend aus pyrogen hergestelltes Siliziumdioxid, durch Fällung hergestelltes Siliziumdioxid, durch Sol-Gelprozess hergestelltes Siliziumdioxid und Gemischen davon.

Das durch Fällung hergestellte Siliziumdioxid (gefällte Kieselsäure, Fällungskieselsäure) bildet sich beispielsweise bei der Umsetzung von Wasserglas-Lösungen (wasserlösliche Natriumsilikate) mit Mineralsäuren. Dabei kann auch ein kolloidales Siliziumdioxid in der Lösung aus Natriumsilikat erzeugt werden (Silica-Sol), das Dispersionen mit sehr kleinen Teilchengrößen und sehr guter Dispersionsstabilität liefert. Nachteilig, besonders beim Polieren von Halbleitersubstraten, ist der Anteil an Verunreinigungen, eingebracht durch das Ausgangsmaterial Natriumsilikat.

Pyrogen hergestelltes Siliziumdioxid, auch pyrogene Kieselsäure genannt, wird mittels Flammenhydrolyse oder Flammenoxidation hergestellt. Dabei werden hydrolysierbare oder oxidierbare Ausgangstoffe in der Regel in einer Wasserstoff-Sauerstoffflamme oxidiert, beziehungsweise hydrolysiert. Als Ausgangsstoffe für pyrogene Verfahren können organische und anorganische Stoffe eingesetzt werden. Besonders geeignet dafür ist Siliziumtetrachlorid. Die so erhaltene hydrophile Kieselsäure ist amorph. Pyrogene Kieselsäuren liegen in der Regel in aggregierter Form vor. Unter "aggregiert" ist zu verstehen, dass sogenannte Primärpartikel, die bei der Genese zunächst entstehen, sich im weiteren Reaktionsverlauf unter Bildung eines dreidimensionalen Netzwerkes fest miteinander verbinden. Die Primärpartikel sind weitestgehend porenfrei und weisen auf ihrer Oberfläche freie Hydroxylgruppen auf. Pyrogenes Siliziumdioxid zeigt eine sehr hohe Reinheit und eine dem kolloidalen Siliziumdioxid vergleichbare Primärteilchengröße. Diese Primärteilchen aggregieren und agglomerieren jedoch, wobei relativ harte Partikel entstehen. Die Dispergierung der Aggregate und Agglomerate erweist sich als schwierig, die Dispersionen sind weniger stabil und neigen zur Sedimentation oder auch zum Gelieren.

Eine weitere für die Herstellung der erfindungsgemäßen Dispersionen geeignete Siliziumdioxidquelle ist ein durch einen Sol-Gelprozess hergestelltes Siliziumdioxid, beispielsweise ein Aerogel, ein Xerogel oder ähnliche Materialien. Bei den Ausgangsmaterialien für eine SiOz-Solsynthese handelt es sich oft um Siliziumalkoholate. Die Hydrolyse von solchen Vorstufen und die Kondensation zwischen den dabei entstehenden reaktiven Spezies, sind die wesentlichen Grundreaktionen des Sol-Gel-Prozesses. Als Siliziumquelle eignen sich insbesondere die Tetraalkylorthosilikate wie beispielsweise Tetramethylorthosilikat oder Tetraethylorthosilikat. Die Entfernung des bei der Hydrolyse von Tetraalkylorthosilikate entstehenden Alkohols findet unter überkritischen Bedingungen (für Methanol, Temperatur > 239,4 °C; Druck > 80,9 bar) statt und führt zur Bildung hochporösen SiOz-Aerogelen.

Im Vergleich zu den typischen Fällungskieselsäuren ist eine pyrogen hergestellte Kieselsäure effizienter bei der Steigerung der Viskosität, stellt eine bessere Suspensionsstabilität in niederviskosen Harzen bereit und führt zu besserer Klarheit. Zu den Vorteilen von Fällungskieselsäure im Vergleich zu pyrogen hergestellter Kieselsäure gehören schnellere und scherunabhängige Dispergierung, niedrigere Kosten, besserer Verlauf der Beschichtung oder des Gusses, geringere Porosität in Gelcoats. Infolgedessen wird in zahlreichen Fällen eine Mischung von pyrogen hergestellter Kieselsäure und Fällungskieselsäure verwendet, um die Vorteile beider Kieselsäuretypen zu erhalten.

Ganz besonders bevorzugt wird in der erfindungsgemäßen Dispersion jedoch ein oder mehrere pyrogen hergestellten Kieselsäuren eingesetzt.

Die Dispersion gemäß der vorliegenden Erfindung enthält von 10 bis 30 Gew.-%, bevorzugt von 15 bis 25 Gew.-% hydrophiles Siliziumdioxid.

Der Begriff "hydrophil" im Sinne der vorliegenden Erfindung bezieht sich auf die Partikel, die mit reinem Wasser vollständig benetzt werden können. Hydrophobe Partikel können nicht durch reines Wasser benetzt werden; sie weisen eine Hydrophobizität auf. Eine solche Hydrophobizität kann üblicherweise durch die Aufbringung entsprechender unpolaren Gruppen an die Kieselsäureoberfläche erreicht werden. Das Ausmaß der Hydrophobizität einer Kieselsäure kann unter anderem durch ihre Methanolbenetzbarkeit bestimmt werden, wie beispielsweise in WO2011/076518 A1, Seiten 5-6, näher beschrieben. In reinem Wasser, trennt sich eine hydrophobe Kieselsäure vollständig vom Wasser ab und schwimmt auf dessen Oberfläche ohne mit dem Lösungsmittel zu benetzen. In reinem Methanol dagegen, verteilt sich eine hydrophobe Kieselsäure im ganzen Lösungsmittelvolumen, es findet eine vollständige Benetzung statt. Bei der Messung der Methanolbenetzbarkeit wird ein maximaler Gehalt an Methanol in einem Methanol-Wasser Testgemisch bestimmt, bei dem noch keine Benetzung der Kieselsäure stattfindet, also 100% der eingesetzten Kieselsäure sich nach dem Kontakt mit dem Testgemisch von dem Testgemisch separiert, nicht benetzt bleibt. Dieser Gehalt an Methanol in dem Methanol-Wasser Gemisch in Vol.-% wird Methanolbenetzbarkeit genannt. Je höher eine solche Methanolbenetzbarkeit ist, desto hydrophober ist die Kieselsäure. Je niedriger die Methanolbenetzbarkeit, desto geringer ist die Hydrophobie des Materials.

Das in der erfindungsgemäßen Dispersion enthaltene hydrophile Siliziumdioxid weist eine Methanolbenetzbarkeit von 0 Vol.-% Methanol in einem Methanol-Wasser Gemisch auf. Die Kieselsäure wird also von reinem Wasser vollständig benetzt.

Kieselsäure und Siliziumdioxid sind als Synonyme zu verwenden.

Zur Isolierung der hydrophilen Kieselsäure aus der erfindungsgemäßen Dispersion und Bestimmung deren Methanolbenetzbarkeit kann die Dispersion getrocknet werden, wobei alle flüchtigen Komponenten der Dispersion entfernt werden. Der resultierende Rückstand kann dann mit Wasser mehrmals, mindestens dreimal gewaschen werden, jedes Mal durch Zentrifugation vom Filtrat abgetrennt werden und auf dessen Methanolbenetzbarkeit analysiert werden.

Die Dispersion der vorliegenden Erfindung ist vorzugsweise basisch und weist einen pH Wert bevorzugt von 9 bis <11, besonders bevorzugt von 10 bis <11 auf.

Im Hinblick auf die Gefahrenklassen "Ätz-/Reizwirkung auf die Haut" und "Schwere Augenschädigung/Augenreizung" gemäß UN-GHS (Global Harmonized System of Classification and Labelling of Chemicals) und gemäß der Verordnung (EG) Nr. 1272/2008 (CLP-Verordnung) gilt ein Gemisch als ätzend für die Haut (Kategorie 1) oder als schwere Augenschäden verursachend (Kategorie 1), wenn es einen extremen pH-Wert von $\leq 2$ bzw. $\geq 11{,}5$ besitzt.

Ein hohes Schutzniveau für die menschliche Gesundheit und die Umwelt können daher der erfindungsgemäßen Dispersion sowie bei deren Herstellung zugesprochen werden.

Weiterhin hat es sich als vorteilhaft erwiesen, wenn Siliziumdioxidpartikel in der erfindungsgemäßen Dispersion eine nummerische mittlere Partikelgröße $d_{50}$ von höchstens 300 nm aufweisen. Besonders bevorzugt ist ein Bereich von 100 bis 250 nm. Eine nummerische mittlere Partikelgröße kann dabei nach ISO13320:2009 durch Laserbeugungs-Partikelgrößenanalyse bestimmt werden.

Als hydrophile, pyrogen hergestellte Siliziumdioxide können hydrophile, pyrogen hergestellte Siliziumdioxide eingesetzt werden, die eine BET-Oberfläche von 20 bis 500 $m^2/g$, bevorzugt von 30 bis 410 $m^2/g$ aufweisen. Besonders bevorzugt können hydrophile, pyrogen hergestellte Siliziumdioxide eingesetzt werden, die eine BET-Oberfläche von 200 $\pm$ 25, 300 $\pm$ 30 oder 380 $\pm$ 30 $m^2/g$ aufweisen. Die spezifische Oberfläche, auch vereinfacht BET Oberfläche genannt, wird nach DIN 9277:2014 durch Stickstoffadsorption nach dem Brunauer-Emmett-Teller-Verfahren bestimmt.

Das in der erfindungsgemäßen Dispersion eingesetzte Siliziumdioxid kann eine Stampfdichte von bis zu 400 g/L, bevorzugt von 20 bis 300 g/L, besonders bevorzugt von 30 bis 200 g/L, ganz besonders bevorzugt von 40 bis 100 g/L aufweisen. Stampfdichten verschiedener pulverförmiger oder grobkörniger granulärer Materialien können nach DIN ISO 787-11:1995 "Allgemeine Prüfverfahren für Pigmente und Füllstoffe - Teil 11: Bestimmung des Stampfvolumens und der Stampfdichte" bestimmt werden. Dabei wird die Fülldichte einer Schüttung nach dem Rütteln und Stampfen gemessen.

Vorzugsweise weist das in der erfindungsgemäßen Dispersion eingesetzte hydrophile Siliziumdioxid einen Kohlenstoffgehalt von < 0,1 % auf, gemessen mit einem Kohlenstoff-Analyzer: LECO CS 244 (LECO Corporation, St. Joseph, MI, 49085-2396, USA). nach der OENORM G 1072.

Vorzugsweise weist das in der erfindungsgemäßen Dispersion eingesetzte hydrophile Siliziumdioxid eine Silanolgruppendichte von 1,5 - 2,7 Silanolgruppen/$nm^2$ auf, gemessen nach der Lithium-Alanat-Methode, beschrieben in der Journal of Colloid and Interface Science, Vol. 125, No. 1, September 1988, S. 62 - 63.

Der Anteil an Wasser in der erfindungsgemäßen wässrigen Dispersion beträgt von 50 bis 80, besonders bevorzugt von 55 bis 75 Gew.-%.

Die erfindungsgemäße Dispersion kann weiterhin bis zu 10 Gew.-% wenigstens eines organischen Lösungsmittels, ausgenommen N-Methylpyrrolidon, enthalten. Das Lösungsmittel wird bevorzugt aus der Gruppe bestehend aus aliphatischen, cycloaliphatischen und aromatischen Kohlenwasserstoffen, Alkoholen, Glycolen, Glycolethern, Ketonen, Estern und Ethern ausgewählt. Explizit seien n-Hexan, n-Heptan, Cyclohexan, Toluol, Xylol, Ethylbenzol, Cumol, Styrol, Dichlormethan, 1,2-Dichlorethan, Methanol, Ethanol, 1-Propanol, 2-Propanol, 1-Butanol, Isobutanol, 2-Ethylhexanol, Cyclohexanol, Diacetonalkohol, Aceton, Methylethylketon, Methylisobutylketon, Diisobutylketon, Cyclohexanon, Mesityloxid, Isophoron, Methylacetat, Methylacetat, Ethylacetat, Butylacetat, Butylether, Ethylacetat, Butylacetat, Isobutylacetat, Methylglycolacetat, Butylglycolacetat, Ethyldiglycolacetat, Butyldiglycolacetat, Methoxypropylacetat, Ethoxypropylacetat, Ethylencarbonat, Propylencarbonat, Diethylether, Methyl-tert-butylether, Tetrahydrofuran, Dioxan, 1-Methoxy-2-propanol, 1-Ethoxy-2-propanol, 1-Isopropoxy-2-propanol, 1-Isobutoxy-2-propanol, Ethylglycol, Propylglycol, Butylglycol, Ethyldiglycol, Butyldiglycol, Methyldipropylenglycol, Ethylenglycol, 1,2-Propylenlycol, 1,3-Butylenglycol, 2,4-Pentandiol, 2-Methyl-2,4-Pentandiol, 2,5-Hexandiol, 2,4-Heptandiol, 2-Ethyl-1,3-Hexandiol, Diethylenglycol, Dipropylenglycol, Tripropylenglycol, Hexandiol, Octandiol und Triethylenglycol genannt. Besonders bevorzugt können Diethylenglycol, Dipropylenglycol und Tripropylenglycol eingesetzt werden.

Die erfindungsgemäße Dispersion ist bevorzugt weitestgehend frei von Farbpigmenten und in der Lackindustrie eingesetzten Bindemitteln. In einer bevorzugten Ausführungsform der Erfindung beträgt der Anteil an Siliziumdioxid wenigstens 90 Gew.-%, besonders bevorzugt wenigstens 98 Gew.-%, am Feststoffanteil der Dispersion. Ganz besonders bevorzugt ist eine Ausführungsform, bei der die feste Phase der Dispersion vollständig aus Siliziumdioxid besteht.

Die erfindungsgemäße Dispersion kann bis zu 1 Gew.-%, bevorzugt von 0 bis 0,5 Gew.-% N-Methylpyrrolidon enthalten. In einer besonders bevorzugten Ausführungsform der Erfindung enthält die Dispersion jedoch kein N-Methylpyrrolidon.

In der erfindungsgemäßen Dispersion werden von 2 bis 25 Gew.-%, bevorzugt von 5 bis 15 Gew.-%, eines Alkoholalkoxylats der allgemeinen Formel $R^1O((CH_2)_mO)_nH$ eingesetzt, wobei $R^1$ ein verzweigter oder unverzweigter Alkyl- oder Alkenylrest mit 10 - 25 C-Atomen, m = 2 oder 3 und n = 10 - 50 ist.

Explizit seien $CH_3(CH_2)_{10}CH_2O[(CH_2)_2O]_{18}H$, $CH_3(CH_2)_{12}CH_2O[(CH_2)_2O]_{18}H$, $CH_3(CH_2)_{14}CH_2O[(CH_2)_2O]_{18}H$, $CH_3(CH_2)_{16}CH_2O[(CH_2)_2O]_{18}H$, $CH_3(CH_2)_{10}CH_2O[(CH_2)_2O]_{20}H$; $CH_3(CH_2)_{12}CH_2O[(CH_2)_2O]_{20}H$, $CH_3(CH_2)_{14}CH_2O[(CH_2)_2O]_{20}H$, $CH_3(CH_2)_{16}CH_2O[(CH_2)_2O]_{20}H$, $CH_3(CH_2)_{10}CH_2O[(CH_2)_2O]_{23}H$, $CH_3(CH_2)_{12}CH_2O[(CH_2)_2O]_{23}H$, $CH_3(CH_2)_{14}CH_2O[(CH_2)_2O]_{23}H$ und $CH_3(CH_2)_{16}CH_2O[(CH_2)_2O]_{23}H$ genannt.

Die erfindungsgemäße Dispersion enthält 0,1 - 20 Gew.-% eines Silanols erhalten durch Hydrolyse mindestens eines Dialkoxysilans der allgemeinen Formel $R^2R^3Si(OR^4)_2$, wobei $R^2$, $R^3$ und $R^4$ jeweils ein verzweigter oder unverzweigter Alkyl- oder Alkenylrest mit 1 - 25 C-Atomen ist.

Besonders bevorzugt können Dimethyldiethoxysilan, Dimethyldimethoxysilan, Dimethyldipropoxysilan, Dimethyldibutoxysilan, Diethyldiethoxysilan, Diethyldimethoxysilan, Diethyldipropoxysilan, Diethyldibutoxysilan oder deren Gemische eingesetzt werden.

Bei einem in der erfindungsgemäßen Dispersion vorliegenden Silanol handelt es sich bevorzugt um ein Dialkyldisilanol der allgemeinen Formel

$$R^2R^3Si(OH)_2$$

und/oder ein $\alpha,\omega$-Dihydroxydialkylsiloxan der allgemeinen Formel

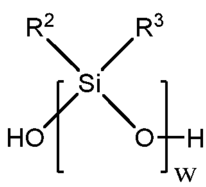,

wobei $R^2$ und $R^3$ jeweils ein verzweigter oder unverzweigter Alkylrest mit 1 - 25 C-Atomen ist und w eine ganze Zahl größer 1 ist.

Das molare Verhältnis von Silanol zum Siliziumdioxid in der erfindungsgemäßen Dispersion beträgt vorzugsweise von 0,01 bis 0,5, besonders bevorzugt von 0,02 bis 0,2 und ganz besonders bevorzugt 0,03 bis 0,1.

Das Silanol kann in der erfindungsgemäßen Dispersion sowohl in freier Form vorliegen als auch an die Siliziumdioxidoberfläche physikalisch gebunden, adsorbiert sein. Diese letzte Art der Bindung ist von der chemischen Bindung, wie im Falle der Hydrophobierung der Kieselsäure mit Silanen, zu unterscheiden. Das relativ schwach physikalisch gebundene Silanol kann von der Oberfläche einfach entfernt werden, indem der Rückstand nach der Trocknung der erfindungsgemäßen Dispersion mit Wasser mehrmals gewaschen wird. Die an der SiOz-Oberfläche chemisch gebundenen Silylgruppen einer hydrophobierten Kieselsäure können demgegenüber durch Waschen mit Wasser nicht entfernt werden.

Die erfindungsgemäße Dispersion enthält 0,5 - 4 Gew.-%, bevorzugt 1,5 - 4 Gew.-% und besonders bevorzugt 2 - 3 Gew.-% wenigstens eines Amins und/oder eines Aminoalkohols mit einem Molekulargewicht von weniger als 500 g/mol.

Als Amin können beispielsweise Ammoniak, primäre Amine der allgemeinen Formel $R^7NH_2$, sekundäre Amine der allgemeinen Formel $R^7R^8NH$ und/oder tertiäre Amine der allgemeinen Formel $R^7R^8R^9N$ eingesetzt werden, wobei $R^7$, $R^8$, $R^9$ unabhängig voneinander verzweigte oder unverzweigte Alkylreste mit 1 - 25 C-Atomen sind.

Mit dem Ausdruck Aminoalkohol ist eine Verbindung gemeint, welche wenigstens eine Aminogruppe und wenigstens eine Hydroxylgruppe enthält. Das Molekulargewicht des Aminoalkohols zur Verwendung in der vorliegenden Erfindung beträgt bevorzugt von 50 bis 500, besonders bevorzugt von 100 bis 250 g/mol. Geeignete Aminoalkohole sind 2-Aminoethanol, 1-Aminoethanol, 3-Amino-1-propanol, 2-Amino-1-propanol, 1-Amino-2-propanol, 2-Amino-2-methyl-1-propanol, 2-Amino-2-methyl-1,3-propandiol, 2-Amino-2-hydroxymethyl-1,3-propandiol, 2-(2-Amino-ethoxy)ethanol, 2-Amino-1-butanol, 4-Amino-1-butanol, 1-Amino-2-butanol, 1-Amino-3-butanol, 3-Amino-1-butanol, 2-Amino-1-cyclohexanol, 3-Amino-1-cyclohexanol, 4-Amino-1-cyclohexanol, 2-Amino-1-(hydroxymethyl)cyclopentan, 2-Amino-1-hexanol, 6-Amino-1-hexanol, 2-Amino-3-methyl-1-butanol, 1-(Aminomethyl)-cyclohexanol, 6-Amino-2-methyl-2-heptanol, 2-Amino-3-methyl-1-pentanol, 2-Amino-4-methyl-1-pentanol, 2-Amino-1-pentanol, 5-Amino-1-pentanol, 1-Amino-2,3-propandiol, 2-Amino-1,3-propandiol, 2-Amino-1,3-propandiol, 2-((3-Aminopropyl)-methyl-amino)-ethanol, 1-(2-dimethylaminoethoxy)2-propanol, 1-(1-dimethylamino-2-propoxy)-2-propanol, 2-(1-dimethylamino-2-propoxy)ethanol, 2-(2-dimethylaminoethoxy)ethanol und 2-[2-(2-dimethylaminoethoxy)ethoxy]ethanol oder deren Gemische.

Besonders bevorzugt sind N,N-Dialkylalkanolaminen wie N,N-Dimethylethanolamin und N,N-Dimethylisopropanolamin.

Die erfindungsgemäße Dispersion enthält weiterhin von 0,1 bis 6,0 Gew.-% mindestens eines Polyethylenglycols und/oder Polypropylenglycols. Bevorzugt sind Polypropylenglycole mit einem mittleren Molekulargewicht (Massenmittel) von 100 g/mol oder mehr, besonders bevorzugt von 150 bis 6000 g/mol.

Die erfindungsgemäße Dispersion enthält 0,1 - 20 Gew.-% mindestens eines Copolymeren der allgemeinen Formel (I)

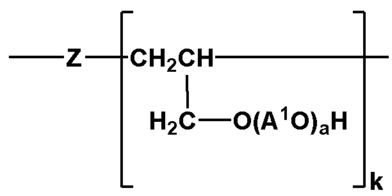

(I) ,

mit Z =

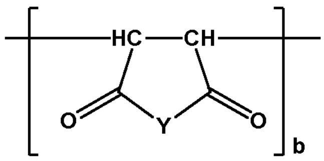

und/oder

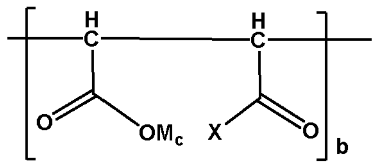

(Ia) (Ib)

mit

M = Wasserstoff, ein- oder zweiwertiges Metallkation, Ammoniumion, organischer Aminrest,

c = 1, oder für den Fall, dass M ein zweiwertiges Metallkation ist, c = 0,5

X = $-OM_c$ oder $-O-(C_pH_{2p}O)_q - R^5$ mit

$R^5$ = H, aliphatischer Kohlenwasserstoffrest mit 1 bis 20 C-Atomen, cycloaliphatischer Kohlenwasserstoffrest mit 5 bis 8 C-Atomen, gegebenenfalls substituierter Arylrest mit 6 bis 14 C-Atomen,

p = 2 - 4, q = 0 -100, $-NHR^6$ und/oder $-NR^6_2$ mit $R^6 = R^5$ oder $-CO-NH_2$

Y = O, $NR^6$

$A^1$ = Ethylenrest, Propylenrest, iso-Propylenrest, Butylenrest,

b = 10 - 30, a= 0 - 50, k = 10 - 30, wobei die Summe b+k im Bereich von 20 - 60 liegt.

$-(A^1O)_a-$ kann sowohl ein Homopolymerisat aus einer der genannten Alkylenoxide als auch ein Block-Copolymerisat oder Co-Polymerisat mit statistischer Verteilung von zwei oder mehreren der Monomeren im Polymermolekül sein. Die Einheiten $[\ ]_b$ und $[\ ]_k$ können ebenfalls als Block-Copolymerisate oder Co-Polymerisate mit statistischer Verteilung von zwei oder mehreren der Monomeren im Polymermolekül vorliegen.

Als ein- oder zweiwertiges Metallkation M finden vorzugsweise Natrium-, Kalium, Calcium-, Magnesiumionen Verwendung. Als organische Aminreste werden vorzugsweise substituierte Ammoniumgruppen eingesetzt, die sich von primären, sekundären oder tertiären $C_1$- bis $C_{20}$-Alkylaminen, $C_1$- bis $C_{20}$-Alkanolaminen, $C_5$- bis $C_8$-Cycloalkylaminen und $C_6$- bis $C_{14}$-Arylaminen ableiten. Beispiele für entsprechende Amine sind Methlylamin, Dimethylamin, Trimethylamin, Ethanolamin, Diethanolamin, Triethanolamin, Cyclohexylamin, Dicyclohexylamin, Phenylamin, Diphenylamin in der protonierten (Ammonium)-Form.

In einer bevorzugten Ausführungsform ist p = 2 oder 3, und die Gruppen X sich dadurch von Polyethylenoxid oder Polypropylenoxid ableiten.

Bevorzugt kann ein Copolymer der allgemeinen Formel Ia oder Ib eingesetzt werden, wobei $A^1$ ein Ethylenrest ist, a = 5 bis 20, und die Summe b + k im Bereich von 20 bis 40 liegt.

Der erfindungsgemäßen Dispersion können weiterhin Entschäumungsmittel und Konservierungsmittel zugesetzt sein. Ihr Anteil an der Dispersion liegt in der Regel bei unter 1 Gew.-%.

Ein weiterer Gegenstand der Erfindung ist eine Lackzubereitung, welche die erfindungsgemäße Dispersion enthält.

Geeignete Bindemittel hierbei können, die in der Lack- und Beschichtungstechnologie üblichen Harze, wie sie zum Beispiel in "Lackharze, Chemie, Eigenschaften und Anwendungen, Hrsg. D. Stoye, W. Freitag, Hanser Verlag, München, Wien 1996", beschrieben sind, sein.

Beispielhaft zu nennen sind unter anderem die Polymerisate und Copolymerisate der (Meth)acrylsäure und deren gegebenenfalls weitere funktionelle Gruppen tragenden Ester mit weiteren ungesättigten Verbindungen, wie zum Beispiel Styrol, Polyetherpolyole, Polyesterpolyole, Polycarbonatpolyole, Polyurethanpolyole und Epoxidharze sowie auch beliebige Mischungen dieser Polymeren, sowie durch Polykondensation hergestellte fettsäuremodifizierte Alkydharze.

Weiterhin können als Polymerkomponenten organische, Hydroxylgruppen tragende Verbindungen eingesetzt werden, zum Beispiel Polyacrylat-, Polyester-, Polycaprolacton-, Polyether-, Polycarbonat-, Polyurethanpolyole und hydroxyfunktionelle Epoxidharze sowie beliebige Mischungen dieser Polymeren. Insbesondere werden wässrige oder lösemittelhaltige beziehungsweise lösemittelfreie Polyacrylat- und Polyesterpolyole sowie deren beliebige Mischungen eingesetzt.

Polyacrylatpolyole sind Copolymerisate von Hydroxylgruppen aufweisenden Monomeren mit anderen olefinisch ungesättigten Monomeren, wie zum Beispiel Ester der (Meth)acrylsäure, Styrol-, alpha-Methylstyrol, Vinyltoluol, Vinylester, Malein- und Fumarsäuremono- und -dialkylester, alpha-Olefine und weiteren ungesättigten Oligomeren und Polymeren.

Die erfindungsgemäße Lackzubereitung kann weiterhin Farbpigmente und/oder inaktive Füllstoffe enthalten.

Die Farbpigmente können organischer oder anorganischer Natur sein. Beispielhaft seien Bleioxide, Bleisilikate, Eisenoxide, Phthalocyaninkomplexe, Titandioxide, Zinkoxide, Zinksulfid, Wismutvanadat, Spinell-Mischoxide, beispielsweise Titan-Chrom, Titan-Nickel, Zinn-Zink Spinell-Mischoxide, plättchenförmige Metallic- oder Interferenz-Pigmente sowie Ruße genannt.

Die erfindungsgemäße Lackzubereitung kann weiterhin inaktive Füllstoffe enthalten. Unter inaktiven Füllstoffen sind dem Fachmann bekannte Füllstoffe zu verstehen, die die rheologischen Eigenschaften der Zubereitung nicht oder nur unwesentlich beeinflussen. Beispielhaft seien Calciumcarbonat, Diatomeenerde, Glimmer, Kaolin, Kreide, Quarz und Talkum genannt.

Farbpigmente und/oder inaktive Füllstoffe liegen üblicherweise in Anteilen von in Summe 10 bis 70 Gew.-%, bevorzugt von 30 bis 50 Gew.-%, bezogen auf den Gesamtfeststoffanteil der Zubereitung, vor.

Der Gesamtfeststoffanteil der Lackzubereitung, der sich aus Siliziumdioxidpartikeln, Bindemittel und gegebenenfalls Farbpigmenten und inaktiven Füllstoffen zusammensetzt, beträgt vorzugsweise von 10 bis 80 Gew.-%, besonders bevorzugt von 20 bis 70 Gew.-%, ganz besonders bevorzugt von 30 bis 60 Gew.-%, bezogen auf die Gesamtmasse der Lackzubereitung.

Ein weiterer Gegenstand der Erfindung ist die Verwendung der Dispersion gemäß der Erfindung als Zusatz zu Hydrofüllern in der Automobilindustrie, als Additiv in wasserbasierenden UV-härtbaren Formulierungen, in wässrigen Klarlacken sowie in pigmentierten Beschichtungssystemen.

Ein weiterer Gegensand der Erfindung ist ein Verfahren zur Herstellung einer wässrigen Siliziumdioxid haltigen Dispersion umfassend Zugabe mindestens eines Dialkoxysilans der allgemeinen Formel $R^2R^3Si(OR^4)_2$, wobei $R^2$, $R^3$ und $R^4$ jeweils ein verzweigter oder unverzweigter Alkyl- oder Alkenylrest mit 1 - 25 C-Atomen ist, zu einem Gemisch

enthaltend 50 - 80 Gew.-% Wasser und 10 - 30 Gew.-% hydrophiles Siliziumdioxid bei einem pH Wert der Dispersion von <11, wobei die resultierende Dispersion während und nach der Zugabe des Dialkoxysilans die Temperatur von 40 °C nicht überschreitet.

Vorzugsweise weist die Dispersion einen pH Wert von 9 bis <11, besonders bevorzugt von 10 bis <11 auf.

Bevorzugt liegt die Silanisierungstemperatur bei < 40°C, besonders bevorzugt bei < 30°C, äußerst bevorzugt < 25°C.

Das im erfindungsgemäßen Verfahren eingesetzte hydrophile Siliziumdioxid ist bevorzugt eine pyrogen hergestellte Kieselsäure mit einer BET Oberfläche von 30 bis 410 $m^2/g$.

Das im Verfahren der Erfindung eingesetzte hydrophile Siliziumdioxid liegt bevorzugt als Pulver vor.

Das molare Verhältnis von in erfindungsgemäßen Verfahren eingesetztem Dialkoxysilan zum eingesetzten Siliziumdioxid beträgt vorzugsweise von 0,02 bis 0,2, ganz bevorzugt 0,03 bis 0,1

Die zuvor beschriebene erfindungsgemäße Dispersion kann beispielsweise durch das erfindungsgemäße Verfahren hergestellt werden.

Das erfindungsgemäße Verfahren wird bevorzugt so durchgeführt, dass das Dialkoxysilan zu einem fein dispergierten wässrigen Gemisch von hydrophilem Siliziumdioxid zugegeben wird. Die Siliziumdioxidpartikel in diesem wässrigen Gemisch weisen vorzugsweise eine numerische mittlere Partikelgröße $d_{50}$ von höchstens 300 nm, besonders bevorzugt von 100 bis 250 nm auf. Eine numerische mittlere Partikelgröße kann dabei nach ISO13320:2009 durch Laserbeugungs-Partikelgrößenanalyse bestimmt werden. Das im Verfahren der Erfindung eingesetzte wässrige Gemisch enthaltend Siliziumdioxid wird bevorzugt durch Zugabe des hydrophilen Siliziumdioxids zu einem wässrigen Gemisch bei einer Drehzahl von mindestens 2000 UpM (Scheibendurchmesser 40 mm) besonders bevorzugt von mindestens 4000 UpM (Scheibendurchmesser 40 mm) hergestellt. So kann gewährleistet werden, dass der durch Hydrolyse von eingesetztem Dialkoxysilan entstehende Silanol optimal an die Oberfläche des fein verteilten Siliziumdioxids angelagert und/oder physikalisch gebunden wird.

Es hat sich weiterhin als vorteilhaft erwiesen, wenn bei der Zugabe des Silanols zum wässrigen Gemisch des hydrophilen Siliziumdioxids das Reaktionsgemisch gerührt wird.

Bei der Durchführung des erfindungsgemäßen Verfahrens wird die wässrige Dispersion während und nach der Zugabe von Dialkoxysilan bei einer Drehzahl von mindestens 100 UpM und höchstens 500 UpM (Scheibendurchmesser jeweils 40 mm) gerührt.

Das Verfahren gemäß der Erfindung, insbesondere Zugabe von Siliziumdioxid und von Dialkoxysilan kann beispielsweise in einer Dispergiervorrichtung ausgeführt werden. Als eine solche Dispergiervorrichtung eignet sich jede Vorrichtung, die in der Lage ist, eine intensive Benetzung des pulverförmigen oder granulären Siliziumdioxids mit der wässerigen Phase zu ermöglichen. In der Lackindustrie werden hierzu üblicherweise die sogenannten Dissolver verwendet, deren relativ einfacher Aufbau eine wartungsarme und leicht zu reinigende Produktionsweise ermöglicht. Je nach geforderter Viskosität oder auch Füllgrad der zu erzeugenden wässrigen Dispersion ist jedoch noch ein intensives Dispergieren oder Nachvermahlen notwendig. Das Nachvermahlen kann beispielsweise in Rührwerkskugelmühlen erfolgen. Vielfach reicht jedoch eine intensive Scherung mit Hilfe von Rotor/Stator-Maschinen aus. Eine zweckdienliche Kombination aus Benetzung- und Dispergiermöglichkeit stellen die Rotor/Stator-Maschinen der Firma Ystral dar, die es ermöglichen, das Pulver einzusaugen und nach dem Schließen der Pulver-Einsaugöffnung intensiv scherend zu dispergieren.

Insbesondere beim Einsatz von Rotor/Stator-Maschinen, bei denen es zum Einsaugen von Luft und daher zu Schaumbildung kommen kann, hat es sich als vorteilhaft erwiesen, nur einen Teil des benötigten Wassers und die Additive vorzulegen und einen Teil des Siliziumdioxides einzuarbeiten. Ab einer bestimmten Menge Siliziumdioxides von circa 25 - 30 Gew.-%, bezogen auf das insgesamt einzuarbeitende Siliziumdioxid, ist dessen entschäumende Wirkung festzustellen. Erst nach Zugabe der gesamten Pulvermenge werden anschließend die noch fehlenden Anteile Wasser hinzugegeben. Es wird dadurch ein ausreichendes Volumen für die anfängliche Schaumbildung beim Beginn der Pulverzugabe im Ansatzbehälter vorgehalten.

Um die Homogenität der erfindungsgemäßen Dispersionen zu gewährleisten, kann vorteilhafterweise ein stufenweises Mischen der Komponente durchgeführt werden, insbesondere bei lagerstabilen hochgefüllten Siliziumdioxidhaltigen Dispersionen.

In einer besonders bevorzugten Ausführungsform der Erfindung wird die wässrige Dispersion nach der Zugabe von Dialkoxysilan mindestens 24 Stunden, besonders bevorzugt mindestens 36 Stunden, ganz besonders bevorzugt mindestens 48 Stunden bei einer Temperatur von 0 bis 40 °C gereift. Nach einer solchen Reifungszeit können beispielsweise die optimalen rheologischen Ergebnisse beim Einsatz der hergestellten Dispersionen in Lacken erzielt werden.

Die folgenden Beispiele dienen dem Fachmann allein zur Erläuterung dieser Erfindung und stellen keinerlei Beschränkung der beanspruchten Dispersion oder des beanspruchten Verfahrens dar.

## Beispiele

### 1. Herstellung der Dispersionen

**Vergleichsbeispiele 1 - 4, erfindungsgemäße Beispiele 3 - 5**

Die Herstellung der Dispersionen erfolgte, indem zunächst alle flüssigen Komponenten der Dispersion gemäß Tabelle 1 außer Dialkoxysilan mittels eines Dissolvers (Dispermill Vango 100, Hersteller: ATP Engineering B.V.) mit Scheibendurchmesser von 40 mm bei 2500 - 5000 UpM und bei Raumtemperatur innerhalb von 30 Min vermischt wurden. Anschließend wurde das Siliziumdioxidpulver unter Rühren zugegeben, zunächst mittels des Dissolvers bei 2500 - 5000 UpM ohne Kühlung innerhalb von 15 - 65 Minuten vordispergiert und dann mittels eines Rotor-Stator Ultra-Turrax (Polytron 6000, Scheibendurchmesser 35 mm) bei 7000 - 10000 UpM innerhalb von 30 Minuten mit Wasserkühlung auf 20 °C dispergiert. Anschließend wird bei 20°C das Dialkoxysilan unter Rühren mittels eines Dissolvers bei 100 - 500 UpM bei weiterer Kühlung auf 20°C zugegeben und 15 Minuten weiter unter konstanten Bedingungen gerührt.

Die Zusammensetzung der Dispersionen und ihre physikalisch-chemischen Eigenschaften sind in Tabelle 1 zusammengefasst. Beispiele 1 und 2 sind Vormischungen für die erfindungsgemäßen Dispersionen (Beispiele 3 - 5).

**Bestimmung der Methanolbenetzbarkeit**

Zur Bestimmung der Hydrophobizität der in der jeweiligen Dispersion enthaltenden Kieselsäure wurden 25 g einer jeweiligen Dispersion bei 40°C im Trockenschrank innerhalb von 72 Stunden getrocknet. 5 Gramm vom Rückstand wurden mit 30 mL Wasser in einem Zentrifugenröhrchen aufgenommen und durch Umschütteln homogenisiert, anschließend wird zwei Stunden bei 20 000 Umdrehungen pro Minute in einer Zentrifuge (Sorvall RC-28S) zentrifugiert. Das Zentrifugat wird wie vorab beschrieben auf diese Weise zehnmal gewaschen und anschließend bei 40°C im Trockenschrank innerhalb von 72 Stunden getrocknet.

Der Rückstand wurde auf eventuelle hydrophobe Bestandteile mit der Methode der Methanolbenetzbarkeit überprüft.

Bei der Bestimmung der Methanolbenetzbarkeit wurden in transparente Zentrifugenröhrchen jeweils 0,2 g Feststoff eingewogen. Es wurden zu jeder Einwaage 8,0 ml eines Methanol/WasserGemisches mit jeweils 10, 20, 30, 40, 50, 60, 70 und 80 Vol.-% Methanol zugegeben. Die verschlossenen Röhrchen wurden 30 Sekunden geschüttelt und anschließend 5 Minuten bei 2500 $min^{-1}$ zentrifugiert. Die Sedimentvolumina wurden abgelesen, in Prozent umgerechnet und graphisch gegen den Methanolgehalt (Vol.-%) aufgetragen. Der Wendepunkt der Kurve entspricht der Methanolbenetzbarkeit.

Die erfindungsgemäßen Dispersionen P5-1 bis P5-3 weisen trotz des hohen Feststoffgehaltes von ca. 17% 24 Stunden nach ihrer Herstellung eine niedrige Viskosität auf.

Die Viskositäten bei 0,5 $sec^1$ (gemessen mit Rheometer Physica MCR 300, Hersteller: Anton Paar GmbH, Proben-Hülse aus Aluminium oder Edelstahl, Rotationskörper CC27) nehmen bei einer Lagerung über 4 Wochen nicht gravierend zu, siehe Tabelle 1a. Die erfindungsgemäßen Dispersionen sind also leicht handhabbar, bleiben zum Beispiel durch Rohrleitungen pumpfähig. Ferner zeigen die Dispersionen kein Sediment.

**Tabelle 1a: Viskositätsveränderung nach 4 Wochen Lagerung**

| Viskosität bei 0,5 $sec^{-1}$ mPa s | P5-1 | P5-2 | P5-3 |
|---|---|---|---|
| Nach der Herstellung | 53 | 109 | 514 |
| Nach 4 Wochen Lagerung | 56 | 238 | 1602 |

Die hydrophoben Siliziumdioxidpartikel können bei Dispersionen P2 und insbesondere P3 nicht mehr ausreichend dispergiert werden. Die Partikelgröße $d_{95}$ ist beispielsweise bei P3 bei über 10 000 nm, damit sind solche Dispersionen für hochwertige Lacke nicht mehr einsatzfähig. Die erfindungsgemäßen Dispersionen P5-1 bis P5-3 sind dagegen leicht herstellbar und weisen keine groben Partikel auf und sind daher für die Herstellung hochwertiger Lacke gut geeignet.

**Tabelle 1 Herstellung der wässrigen $SiO_2$-haltigen Dispersionen**

| Beispiele | Vgl. Bsp. 1 | Vgl. Bsp. 2 | Vgl. Bsp. 3 | Vgl. Bsp. 4 | Beispiel 1 | Beispiel 2 | Beispiel 3 | Beispiel 4 | Beispiel 5 |
|---|---|---|---|---|---|---|---|---|---|
| SiOz-Quelle | ohne | R 972[a] | R 974 [b] | R 976 S [c] | AE 300 [d] | AE 300 [d] | AE 300 [d] | AE 300 [d] | AE 300 [d] |
| Dispersion Nr. | P0 | P1 | P2 | P3 | P4 | P5-0 | P5-1 | P5-2 | P5-3 |
| Einwaagen, [g] | | | | | | | | | |
| P5-0 | | | | | | | 100 | 100 | 100 |
| Wasser | 67,5 | 67,5 | 55 | 55 | 76 | | | | |
| P4 | | | | | | 80 | | | |
| Tripropylenglycol (TPG) | 1 | 1 | 2 | 2 | - | 2 | | | |
| Byk 011[e] | 0,3 | 0,3 | 0,6 | 0,6 | - | 0,6 | | | |
| Dimethylaminoethanol (DMEA) | 2 | 2 | 4 | 4 | - | 2 | | | |
| Ammoniak ($NH_3$) | - | - | - | | 2 | | | | |
| TEGO DISPERS® 760 W[f] | 8,9 | 8,9 | 17,8 | 17,8 | - | 17,8 | | | |
| Surfynol ® 104 E[g] | 0,3 | 0,3 | 0,6 | 0,6 | - | 0,6 | | | |
| SiOz-Quelle | ohne | 20 | 20 | 20 | 22 | (17,1%[h]) | (16,9%[i]) | (16,7%[i]) | (16,5%[i]) |
| Dimethyldiethoxysilan | ohne | Ohne | ohne | ohne | ohne | ohne | 1,15 | 2,3 | 3,8 |
| Alle Einwaagen, Summe | 80 | 100 | 100 | 100 | 100 | 103 | 101,15 | 102,3 | 103,8 |
| Dispergierung | | | | | | | | | |
| Einarbeitungszeit Pulver, Min | ohne | 40 | 40 | 65 | 15 | 15 | 15 | 15 | 15 |
| Dispergierungszeit UT, Min | ohne | 30 | 30 | 30 | 30 | 30 | 30 | 30 | 30 |
| Dispersionseigenschaften | | | | | | | | | |
| pH-Wert | 10,90 | 10,44 | 10,75 | 11,17 | 10,30 | 10,64 | 10,60 | 10,59 | 10,58 |
| D(50) in nm | - | 108 | 200 | 171 | 99 | 137 | 104 | 116 | 113 |
| D(95) in nm | - | 245 | 1880 | 10230 | 207 | 223 | 405 | 367 | 360 |

(fortgesetzt)

| Dispersionseigenschaften | | | | | | | | | |
|---|---|---|---|---|---|---|---|---|---|
| $SiO_2$-Methanolbenetzbarkeit In Vol.-% | - | 35 | 35 | 30 | 0 | 0 | 0 | 0 | 0 |

[a] R 972 = hydrophobe Kieselsäure mit BET 90-130 $m^2/g$, Hydrophobierungsmittel Dimethyldichlorsilan, Hersteller Evonik Resource Effieciency GmbH.
[b] R 974 = hydrophobe Kieselsäure mit BET 150-190 $m^2/g$, Hydrophobierungsmittel Dimethyldichlorsilan, Hersteller Evonik Resource Effieciency GmbH.
[c] R 976 S = hydrophobe Kieselsäure mit BET 225-275 $m^2/g$, Hydrophobierungsmittel Dimethyldichlorsilan, Hersteller Evonik Resource Effieciency GmbH.
[d]AE 300 = Aerosil® 300, eine hydrophile Kieselsäure mit BET = 300 $m^2/g$, Hersteller Evonik Resource Effieciency GmbH.
[e]Byk 011 = Entschäumer, Hersteller BYK Additives & Instruments.
[f]TEGO DISPERS® 760 W = Dispergierungsmittel, Hersteller Evonik Resource Efficiency GmbH.
[g]Surfynol ® 104 E = nicht-ionisches Tensid, Hersteller Resource Efficiency GmbH.
[h] wird über P4 zugegeben
[i] wird über P5-0 zugegeben

## 2. Herstellung der Lacke mit Siliziumdioxid haltigen Dispersionen

### Vergleichsbeispiele 5-8, Beispiele 6-8

Zu einer wässrigen Polyurethan-Acrylhybriddispersion (Ecrothan 2012) wurden bei Raumtemperatur unter Rühren mit 1000 UpM mit einem Propellerrührer (Hersteller: Heidolph) die in der Tabelle 2 angegebenen übrigen Lackkomponenten zugegeben gefolgt von der jeweiligen Siliziumdioxidhaltigen Dispersion. Die so erhaltene Lackdispersion wurde 10 Minuten mit 1000 UpM weiter gerührt.

Die Zusammensetzung der wasserbasierten Lackformulierungen und ihre physikalisch-chemischen Eigenschaften sind in Tabelle 2 zusammengefasst.

### Bestimmung der Transparenz (Jetness)

Messgerät: Densitometer D19C der Firma Grethag Macbeth.

Mit einem Densitometer kann über die Schwarzzahl $M_Y$ an einem getrockneten Lackfilm, die Transparenz eines Klarlackes gemessen werden. Die Bestimmung erfolgt an Lackfilmen, die auf Glasplatten appliziert sind und die auf ein schwarz beschichtetes Blech (Q-Panel DT 36) gelegt wurden.

Applikation: Kastenrakel 150 $\mu$m auf Glasscheibe transparent 2 mm

Trocknungsbedingungen: Ablüften und Trocknung bei Raumtemperatur.

Vor der Messung wird sichergestellt, dass die Oberfläche des Prüfbleches mit dem zu prüfenden applizierten Lack sauber ist.

Das Messgerät wird mit der Messöffnung auf das Prüfblech gelegt. Durch Drücken der Messtaste mit dem Handballen wird die Messung ausgelöst.

Für die Schwarzzahl $M_Y$ werden pro Glasplatte 5 Messungen durchgeführt, daraus wird ein Mittelwert errechnet. Die Ergebnisse werden als Densitometerwert ($D_B$) - Wert angezeigt. Die größte zulässige Abweichung zwischen dem niedrigsten und höchsten Wert darf maximal $D_B$ = 0,05 betragen.

Das Ergebnis wird als Schwarzzahl $M_Y$ angegeben, die sich folgendermaßen aus dem Densitometerwert berechnet: $M_Y = D_B \times 100$

### Bestimmung der Thixotropieindices

Die Bestimmung der Thixotropieindices wird durch Viskositätsmessungen frühestens 24 Stunden nach Herstellung (Messgerät: Rheometer Physica MCR 300, Hersteller: Anton Paar GmbH, Proben-Hülse aus Aluminium oder Edelstahl, Rotationskörper CC27) durchgeführt, wobei der Thixotropieindex

$$T_i = \text{Viskosität bei 0,5 UpM / Viskosität bei 500 UpM ist.}$$

Die entsprechenden Werte der Viskosität werden aus der sinkenden Fließkurve entnommen. Parameter zur Erstellung der Fließkurve: $\dot{\gamma}$ = 0,01 $s^{-1}$ ansteigend auf 500 $s^{-1}$ und von 500 $s^{-1}$ sinkend zurück auf 0,01 $s^{-1}$

Der Thixotropieindex ist ein Maß für die rheologische Wirksamkeit einer Dispersion in einem Lack. Je höher dieser Index umso weniger wird der Lack an senkrechten Flächen zum Ablaufen neigen.

Alle Lacke mit den Siliziumdioxidhaltigen Dispersionen zeigen erwartungsgemäß etwas geringere Transparenz(Jetness)-Werte als der reine Klarlack ohne SiOz (Vergleichsbeispiel 5, Tabelle 2). Der reine Klarlack zeigt aber wesentlich geringere Thixotropieindices als die mit SiOz-haltigen Pasten modifizierten Lacke (Tabelle 2). Die Lacke mit den erfindungsgemäßen Dispersionen P5-1 (Beispiel 6), P5-2 (Beispiel 7) und P5-3 (Beispiel 8) weisen wesentlich höhere Thixotropieindices und höhere Transparenz(Jetness)-Werte auf als die Lacke enthaltend hydrophile Kieselsäure AEROSIL® 300, jedoch ohne DMEA und/oder Dialkoxysilan (Dispersionen P4 und P5-0, Vergleichsbeispiele 7 und 8) oder hydrophobierte Kieselsäure AEROSIL® R 972 (Dispersion P1, Vergleichsbeispiel 6).

Alle hydrophilen Kieselsäuren lassen sich sehr einfach und schnell (15 Min) in die wässrigen Gemische einarbeiten, während die hydrophoben Kieselsäuren wesentlich länger dafür brauchen (40-65 Min, Vergleichsbeispiele 2-4).

**Tabelle 2: Klarlack mit/ohne Siliziumdioxid haltige Dispersion**

| **Beispiel** | **Vgl. Bsp. 5** | **Vgl. Bsp. 6** | **Vgl. Bsp. 7** | **Vgl. Bsp. 8** | **Beispiel 6** | **Beispiel 7** | **Beispiel 8** |
|---|---|---|---|---|---|---|---|
| Dispersion | P0 | P1 | P4 | P5-0 | P5-1 | P5-2 | P5-3 |
| Lack | L-P0 | L-P1 | L-P4 | L-P5-0 | L-P5-1 | L-P5-2 | L-P5-3 |
| Einwaagen, g | | | | | | | |
| Ecrothan 2012 [a] | 80 | 80 | 80 | 80 | 80 | 80 | 80 |
| Dipropylenglycolmethylether (DPM) | 3 | 3 | 3 | 3 | 3 | 3 | 3 |
| PnB[b] | 4,2 | 4,2 | 4,2 | 4,2 | 4,2 | 4,2 | 4,2 |
| DPnB[c] | 2,2 | 2,2 | 2,2 | 2,2 | 2,2 | 2,2 | 2,2 |
| Triethylamin (TEA) | 0,2 | 0,2 | 0,2 | 0,2 | 0,2 | 0,2 | 0,2 |
| Wasser | 3 | 3 | 3 | 3 | 3 | 3 | 3 |
| Tego Foamex® 805 N[d] | 0,2 | 0,2 | 0,2 | 0,2 | 0,2 | 0,2 | 0,2 |
| BYK 346[e] | 0,2 | 0,2 | 0,2 | 0,2 | 0,2 | 0,2 | 0,2 |
| Paste | 8 | 10 | 10 | 10 | 10 | 10 | 10 |
| Summe Einwaagen, g | 101 | 103 | 103 | 103 | 103 | 103 | 103 |
| Lackeigenschaften | | | | | | | |
| $T_i$ (Thix index) Klarlack | 1,30 | 1,67 | 1,48 | 1,57 | 1,92 | 3,05 | 3,05 |
| Transparenz/ Jetness | 274 | 236 | 223 | 228 | 239 | 246 | 242 |

[a]Ecrothan 2012 = wässrige Polyurethan-Acrylhybriddispersion, Hersteller Michelman INC. [b]PnB = Solvenon® PnB, Propylenglykolmonobutylether 1-Butoxy-2-propanol, Hersteller BASF SE. [c]DPnB = Solvenon® DPnB, Dipropylenglykolmonobutylether Butoxydipropanol Isomerengemisch, Hersteller BASF SE. [d]Tego Foamex® 805 N = Entschäumer, Hersteller Evonik Resource Efficiency GmbH [e]BYK 346 = Silikontensid, Hersteller BYK Additives & Instruments.

3. **Herstellung der wässrigen $SiO_2$-haltigen Dispersionen mit versch. Aminkonzentrationen**

**Vergleichsbeispiel 4a, erfindungsgemäße Beispiele 4b- 4d**

Die Herstellung der Dispersionen erfolgte, indem zunächst alle flüssigen Komponenten der Dispersion gemäß Tabelle 3 außer Dialkoxysilan mittels eines Dissolvers (Dispermill Vango 100, Hersteller: ATP Engineering B.V.) mit Scheibendurchmesser von 40 mm bei 2500 - 5000 UpM und bei Raumtemperatur innerhalb von 30 Min vermischt wurden. Anschließend wurde das Siliziumdioxidpulver unter Rühren zugegeben, zunächst mittels des Dissolvers bei 2500 - 5000 UpM ohne Kühlung innerhalb von 15 - 60 Minuten vordispergiert und dann mittels eines Rotor-Stator Ultra-Turrax (Polytron 6000, Scheibendurchmesser 35 mm) bei 7000 - 10000 UpM innerhalb von 30 Minuten mit Wasserkühlung auf 20 °C dispergiert. Anschließend wird bei 28°C das Dialkoxysilan unter Rühren mittels eines Dissolvers bei 100 - 500 UpM bei weiterer Kühlung auf 28°C zugegeben und 15 Minuten weiter unter konstanten Bedingungen gerührt.

Die Zusammensetzung der Dispersionen und ihre physikalisch-chemischen Eigenschaften sind in Tabelle 3 zusammengefasst.

Es zeigte sich, dass das Vergleichsbeispiel 4a ohne DMEA schnittfest wurde.

Bei der Verwendung von DMEA bis zu 4 Gew.-%-weisen die erfindungsgemäßen Dispersionen eine verarbeitbare Viskosität auf.

**Tabelle 3: Herstellung der wässrigen $SiO_2$-haltigen Dispersionen mit versch. DMEA-Konzentration**

| Beispiele | Vgl.Bsp 4a | Beispiel 4b | Beispiel 4c | Beispiel 4d |
|---|---|---|---|---|
| Einwaagen, g | | | | |
| Wasser | 58,30 | 56,95 | 55,63 | 54,30 |
| Tripropylenglycol (TPG) | 2,00 | 2,00 | 2,00 | 2,00 |
| Dimethylaminoethanol (DMEA) | 0 | 1,35 | 2,67 | 4,00 |
| TEGO DISPERS® 760 W[a] | 17,00 | 17,00 | 17,00 | 17,00 |
| SiOz-Quelle [b] | 20,00 | 20,00 | 20,00 | 20,00 |
| Dimethyldiethoxysilan | 2,70 | 2,70 | 2,70 | 2,70 |
| Alle Einwaagen, Summe | 100,00 | 100,00 | 100,00 | 100,00 |
| Einarbeitungszeit Pulver, Min | 60 | 45 | 20 | 15 |
| Dispergierungszeit UT, Min | 30 | 30 | 30 | 30 |
| pH-Wert | 7,0[c] | 10,4 | 10,7 | 10,9 |
| Viskosität bei 0,5 $sec^{-1}$ mPa s [d] | schnittfest | 9560 | 2250 | 501 |
| $SiO_2$-Methanolbenetzbarkeiti in Vol.-% | | 0 | 0 | 0 |

[a] TEGO DISPERS® 760 W = Dispergierungsmittel, Hersteller Evonik Resource Efficiency GmbH.
[b] Aerosil® 300, eine hydrophile Kieselsäure mit BET = 300 $m^2/g$, Hersteller Evonik Resource Effieciency GmbH.
[c] nach Verdünnen mit Wasser auf 5%
[d] gemessen mit: Rheometer Physica MCR 300, Hersteller: Anton Paar GmbH, Proben-Hülse aus Aluminium oder Edelstahl, Rotationskörper CC27

4. **Herstellung der wässrigen $SiO_2$-haltigen Dispersionen unter Variation der Silanisierungstemperatur und Prüfung in einem Lacksystem**

**Vergleichsbeispiel 4c***, erfindungsgemäße Beispiele 4c, 4c*, 4c****

Der Einfluss der Silanisierungstemperatur wurde basierend auf der Rezeptur des Beispiels 4c (siehe Tabelle 3) untersucht.

Die Umsetzung wurde bei einer Silanisierungstemperatur von 23°C, 28°C, 37°C und 60°C durchgeführt.

Die physikalisch-chemischen Eigenschaften der Dispersionen sowie der Lacke sind aus Tabelle 4 ersichtlich.

Die Silanisierungstemperatur von 60°C führt zu schnittfesten Dispersionen (Vgl.Bsp. 4c***).

Alle erfindungsgemäße Beispiele 4c, 4c* und 4c** sind pumpbar und sind somit im Großen und Ganzen leicht handhabbar und zeigen im Ecrothan-Lack die gewünschte Erhöhung der Thixotropie. (siehe Tabelle 4)

Es wurde zudem nachgewiesen, dass bei Silanisierungstemperaturen > 40°C als Nebenprodukt $D_4$ gebildet wird, das als toxisch eingestuft wird. Die Bestimmung von $D_4$ erfolgt $^1$H-NMR-spektroskopisch durch Integration der Signale bei 0,4 ppm, wobei DMEA als interner Standard fungiert ($^1$H-NMR, Bruker, 600 MHz, Lösungsmittel DMSO).

**Tabelle 4: Herstellung der wässrigen $SiO_2$-haltigen Dispersionen unter Variation der Silanisierungstemperatur und Lacksystem-Prüfung**

| Beispiele | Beispiel 4c* | Beispiel 4c | Beispiel 4c** | Vgl.Bsp 4c*** |
|---|---|---|---|---|
| Silanisierungstemperatur °C | 23 | 28 | 37 | 60 |
| Cyclooctamethyltetrasiloxan ($D_4$) ppm | 0 | 0 | ca. 3 | 400 |
| Viskosität, Dispersion bei 0,5 $sec^{-1}$, mPa s [f] | 1010 | 2250 | 9100 | schnittfest |
| | | | | |

(fortgesetzt)

| Lack | L-P4c* | L-P4c | L-P4c** | - |
|---|---|---|---|---|
| Einwaagen, g | | | | |
| Ecrothan 2012 [a] | 80 | 80 | 80 | |
| Dipropylenglycolmethylether (DPM) | 3 | 3 | 3 | |
| PnB[b] | 4,2 | 4,2 | 4,2 | |
| DPnB[c] | 2,2 | 2,2 | 2,2 | |
| Triethylamin (TEA) | 0,2 | 0,2 | 0,2 | |
| Wasser | 3 | 3 | 3 | |
| Tego Foamex® 805 N[d] | 0,2 | 0,2 | 0,2 | |
| BYK 346[e] | 0,2 | 0,2 | 0,2 | |
| Dispersion | 10 | 10 | 10 | |
| Summe Einwaagen, g | 103 | 103 | 103 | |
| $T_i$ (Thix index) Klarlack | 3,70 | 3,05 | 2,70 | |

[a]Ecrothan 2012 = wässrige Polyurethan-Acrylhybriddispersion, Hersteller Michelman INC.
[b]PnB = Solvenon® PnB, Propylenglykolmonobutylether 1-Butoxy-2-propanol, Hersteller BASF SE.
[c]DPnB = Solvenon® DPnB, Dipropylenglykolmonobutylether Butoxydipropanol Isomerengemisch, Hersteller BASF SE.
[d]Tego Foamex® 805 N = Entschäumer, Hersteller Evonik Resource Efficiency GmbH
[e]BYK 346 = Silikontensid, Hersteller BYK Additives & Instruments
[f] gemessen mit: Rheometer Physica MCR 300, Hersteller: Anton Paar GmbH, Proben-Hülse aus Aluminium oder Edelstahl, Rotationskörper CC27

**Patentansprüche**

**1.** Wässrige Dispersion, enthaltend

a. 50 - 80 Gew.-% Wasser, bevorzugt 55 - 75 Gew.-% Wasser,
b. 10 - 30 Gew.-%, bevorzugt 15 - 25 Gew.-% hydrophiles Siliziumdioxid mit einer Methanolbenetzbarkeit von 0 Vol.-% Methanol in einem Methanol-Wasser Gemisch,
c. 2 - 25 Gew.-%, wenigstens ein Alkoholalkoxylat der allgemeinen Formel $R^1O((CH_2)_mO)_nH$, wobei $R^1$ ein verzweigter oder unverzweigter Alkyl- oder Alkenylrest mit 10 - 25 C-Atomen, m = 2 oder 3 und n = 10 - 50 ist,
d. 0,1 - 20 Gew.-%, bevorzugt 0,5 - 5 Gew.-% ein Silanol erhalten durch Hydrolyse mindestens eines Dialkoxysilans der allgemeinen Formel $R^2R^3Si(OR^4)_2$, wobei $R^2$, $R^3$ und $R^4$ jeweils ein verzweigter oder unverzweigter Alkyl- oder Alkenylrest mit 1 - 25 C-Atomen ist,
e. 0,5 - 4 Gew.-%, bevorzugt 1,5,0 - 4,0 Gew.-% und besonders bevorzugt 2,0 - 3,0 Gew.-% wenigstens ein Amin und/oder einen Aminoalkohol mit einem Molekulargewicht von weniger als 500 g/mol und
f. 0,1 - 20 Gew.-%, mindestens ein Copolymer der allgemeinen Formel (I)

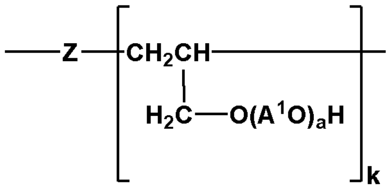

(I),

mit Z =

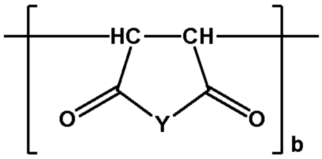

und/oder

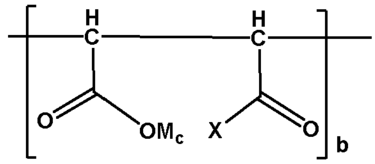

(Ia) (Ib)

mit

M = Wasserstoff, ein- oder zweiwertiges Metallkation, Ammoniumion, organischer Aminrest,
c = 1, oder für den Fall, dass M ein zweiwertiges Metallkation ist, c = 0,5
X = $-OM_c$ oder $-O-(C_pH_{2p}O)_q - R^5$ mit
$R^5$ = H, aliphatischer Kohlenwasserstoffrest mit 1 bis 20 C-Atomen, cycloaliphatischer Kohlenwasserstoffrest mit 5 bis 8 C-Atomen, gegebenenfalls substituierter Arylrest mit 6 bis 14 C-Atomen,
p = 2 - 4, q = 0 -100, $-NHR^6$ und/oder $-NR^6_2$ mit $R^6 = R^5$ oder $-CO-NH_2$
Y = O, $NR^6$
$A^1$ = Ethylenrest, Propylenrest, iso-Propylenrest, Butylenrest,
b = 10 - 30, a= 0 - 50, k = 10 - 30, wobei die Summe b+k im Bereich von 20 - 60 liegt,

g. 0,1 - 6,0 Gew.-%, mindestens ein Polyethylenglycol und/oder Polypropylenglycol, wobei alle Angaben zu Gewichtsprozenten sich auf die gesamte Dispersionsmasse beziehen und wobei die Dispersion einen pH Wert von <11 aufweist.

2. Dispersion nach Anspruch 1, **dadurch gekennzeichnet, dass** sie einen pH Wert von 9 bis <11, besonders bevorzugt von 10 bis <11 aufweist.

3. Dispersion nach Anspruch 1 oder 2, **dadurch gekennzeichnet, dass** das hydrophile Siliziumdioxid einen Kohlenstoffgehalt < 0,1 % aufweist, gemessen mit einem Kohlenstoff-Analyzer: LECO CS 244 (LECO Corporation, St. Joseph, MI, 49085-2396, USA).

4. Dispersion nach einem der Ansprüche 1 oder 3, **dadurch gekennzeichnet, dass** das hydrophile Siliziumdioxid eine Silanolgruppendichte von 1,5 - 2,7 Silanolgruppen/$nm^2$, gemessen nach der Lithium-Alanat-Methode, aufweist.

5. Dispersion nach einem der Ansprüche 1 bis 4, **dadurch gekennzeichnet, dass** das Silanol ein Dialkyldisilanol der allgemeinen Formel

$$R^2R^3Si(OH)_2$$

und/oder ein $\alpha,\omega$-Dihydroxydialkylsiloxan der allgemeinen Formel

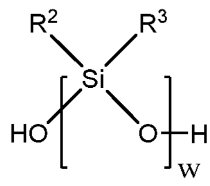

ist, wobei $R^2$ und $R^3$ jeweils ein verzweigter oder unverzweigter Alkylrest mit 1 - 25 C-Atomen ist und w eine ganze Zahl größer 1 ist.

6. Dispersion nach einem der Ansprüche 1 bis 5, **dadurch gekennzeichnet, dass** das hydrophile Siliziumdioxid eine mittlere Partikelgröße $d_{50}$ von höchstens 300 nm aufweist.

7. Dispersion nach einem der Ansprüche 1 bis 6, **dadurch gekennzeichnet, dass** das hydrophile Siliziumdioxid eine pyrogen hergestellte Kieselsäure mit einer BET Oberfläche von 30 bis 410 $m^2/g$ ist.

8. Dispersion nach einem der Ansprüche 1 bis 7, **dadurch gekennzeichnet, dass** das molare Verhältnis von Silanol zum Siliziumdioxid von 0,02 bis 0,2 beträgt.

9. Lackzubereitung enthaltend die Dispersion gemäß einem der Ansprüche 1 bis 8.

10. Verwendung der Dispersion gemäß einem der Ansprüche 1 bis 8 als Zusatz zu Hydrofüllern in der Automobilindustrie, als Additiv in wasserbasierenden UV-härtbaren Formulierungen, in wässrigen Klarlacken sowie in pigmentierten Beschichtungssystemen.

11. Verfahren zur Herstellung einer wässrigen Siliziumdioxid haltigen Dispersion nach 1 bis 8 umfassend Zugabe mindestens eines Dialkoxysilans der allgemeinen Formel $R^2R^3Si(OR^4)_2$, wobei $R^2$, $R^3$ und $R^4$ jeweils ein verzweigter oder unverzweigter Alkyl- oder Alkenylrest mit 1 - 25 C-Atomen ist, zu einem Gemisch enthaltend 50 - 80 Gew.-% Wasser und 10 - 30 Gew.-% hydrophiles Siliziumdioxid bei einem pH Wert der Dispersion von <11, bevorzugt von 9 bis <11, besonders bevorzugt von 10 bis <11, **dadurch gekennzeichnet dass** die resultierende Dispersion während und nach der Zugabe des Dialkoxysilans die Temperatur von 40 °C, besonders bevorzugt bei < 30°C, äußerst bevorzugt < 25°C nicht überschreitet.

12. Verfahren nach einem der Ansprüche 11, **dadurch gekennzeichnet, dass** das eingesetzte hydrophile Siliziumdioxid eine pyrogen hergestellte Kieselsäure mit einer BET Oberfläche von 30 bis 410 $m^2/g$ ist.

13. Verfahren nach einem der Ansprüche 11 - 12, **dadurch gekennzeichnet, dass** das molare Verhältnis von eingesetztem Dialkoxysilan zum eingesetzten Siliziumdioxid von 0,02 bis 0,2 beträgt.

14. Verfahren nach einem der Ansprüche 11 bis 13, **dadurch gekennzeichnet, dass** das eingesetzte wässrige Gemisch enthaltend Siliziumdioxid durch Zugabe des hydrophilen Siliziumdioxids zu einem wässrigen Gemisch bei einer Drehzahl von mindestens 2000 UpM hergestellt wird.

15. Verfahren nach einem der Ansprüche 11 bis 14, **dadurch gekennzeichnet, dass** die wässrige Dispersion während der Zugabe von Dialkoxysilan bei 100-500 UpM (Scheibendurchmesser 40 mm) und nach der Zugabe noch weitere 15 Minuten gerührt wird.

16. Verfahren nach einem der Ansprüche 11 bis 15, **dadurch gekennzeichnet, dass** die wässrige Dispersion nach der Zugabe von Dialkoxysilan mindestens 24 Stunden bei einer Temperatur von 0 bis 40 °C gereift wird.

## Claims

1. Aqueous dispersion comprising

   a. 50 - 80% by weight water, preferably 55 - 75% by weight water,
   b. 10 - 30% by weight, preferably 15 - 25% by weight hydrophilic silicon dioxide having a methanol wettability of 0% by volume methanol in a methanol-water mixture,

c. 2 - 25% by weight of at least one alcohol alkoxylate of the general formula $R^4O((CH_2)_mO)_nH$, wherein $R^1$ is a branched or unbranched alkyl or alkenyl radical having 10 - 25 carbon atoms, m = 2 or 3 and n = 10 - 50,
d. 0.1 - 20% by weight, preferably 0.5 - 5% by weight of a silanol obtained by hydrolysis of at least one dialkoxysilane of the general formula $R^2R^3Si(OR^4)_2$, wherein $R^2$, $R^3$ and $R^4$ are in each case a branched or unbranched alkyl or alkenyl radical having 1 - 25 carbon atoms,
e. 0.5 - 4% by weight, preferably 1.50 - 4.0% by weight and particularly preferably 2.0 - 3.0% by weight of at least one amine and/or an amino alcohol having a molecular weight of less than 500 g/mol and
f. 0.1 - 20% by weight of at least one copolymer of the general formula (I)

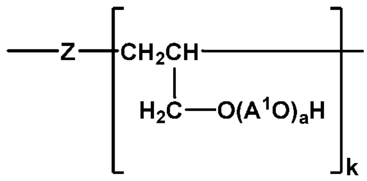

(I),

where Z =

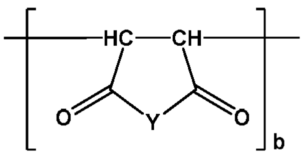

and/or

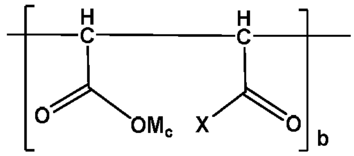

(Ia) (Ib)

where

M = hydrogen, monovalent or divalent metal cation, ammonium ion, organic amine radical,
c = 1, or in the case where M is a divalent metal cation, c = 0.5
X = $-OM_c$ or $-O-(C_pH_{2p}O)_q - R^5$ where
$R^5$ = H, aliphatic hydrocarbon radical having 1 to 20 carbon atoms, cycloaliphatic hydrocarbon radical having 5 to 8 carbon atoms, optionally substituted aryl radical having 6 to 14 carbon atoms,
p = 2 - 4, q = 0 - 100, $-NHR^6$ and/or $-NR^6_2$ where $R^6 = R^5$ or $-CO-NH_2$
Y = O, $NR^6$
$A^1$ = ethylene radical, propylene radical, isopropylene radical, butylene radical,
b = 10 - 30, a = 0 - 50, k = 10 - 30, wherein the sum b+k is in the range of 20 - 60,

g. 0.1 - 6.0% by weight of at least one polyethylene glycol and/or polypropylene glycol,

wherein all figures refer to percentages by weight of the entire dispersion composition, and wherein the dispersion has a pH of <11.

2. Dispersion according to Claim 1, **characterized in that** said dispersion has a pH of 9 to <11, particularly preferably of 10 to <11.

3. Dispersion according to Claim 1 or 2, **characterized in that** the hydrophilic silicon dioxide has a carbon content of < 0.1%, measured with a carbon analyser: LECO CS 244 (LECO Corporation, St. Joseph, MI, 49085-2396, USA) .

4. Dispersion according to either of Claims 1 and 3, **characterized in that** the hydrophilic silicon dioxide has a silanol group density of 1.5 - 2.7 silanol groups/$nm^2$, measured by the lithium alanate method.

5. Dispersion according to any of Claims 1 to 4, **characterized in that** the silanol is a dialkyldisilanol of the general formula

$$R^2R^3Si(OH)_2$$

and/or an α,ω-dihydroxydialkylsiloxane of the general formula

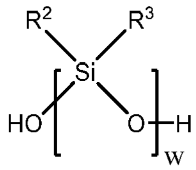,

wherein $R^2$ and $R^3$ are in each case a branched or unbranched alkyl radical having 1 - 25 carbon atoms and w is an integer greater than 1.

**6.** Dispersion according to any of Claims 1 to 5, **characterized in that** the hydrophilic silicon dioxide has a mean particle size $d_{50}$ of at most 300 nm.

**7.** Dispersion according to any of Claims 1 to 6, **characterized in that** the hydrophilic silicon dioxide is a fumed silica having a BET surface area of 30 to 410 $m^2/g$.

**8.** Dispersion according to any of Claims 1 to 7, **characterized in that** the molar ratio of silanol to silicon dioxide is from 0.02 to 0.2.

**9.** Lacquer preparation containing the dispersion according to any of Claims 1 to 8.

**10.** Use of the dispersion according to any of Claims 1 to 8 as an additive to hydrofillers in the automotive industry, as an additive in water-based UV-curable formulations, in aqueous clearcoats and in pigmented coating systems.

**11.** Process for producing an aqueous silicon dioxide-containing dispersion according to 1 to 8 comprising addition of at least one dialkoxysilane of the general formula $R^2R^3Si(OR^4)_2$, wherein $R^2$, $R^3$ and $R^4$ are in each case a branched or unbranched alkyl or alkenyl radical having 1 - 25 carbon atoms, to a mixture comprising 50 - 80% by weight water and 10 - 30% by weight hydrophilic silicon dioxide at a pH of the dispersion of <11, preferably of 9 to <11, particularly preferably of 10 to <11, **characterized in that** the temperature of the resulting dispersion during and after the addition of the dialkoxysilane does not exceed 40°C, particularly preferably < 30°C, especially preferably < 25°C.

**12.** Process according to any of Claims 11, **characterized in that** the hydrophilic silicon dioxide used is a fumed silica having a BET surface area of 30 to 410 $m^2/g$.

**13.** Process according to either of Claims 11 and 12, **characterized in that** the molar ratio of dialkoxysilane used to silicon dioxide used is from 0.02 to 0.2.

**14.** Process according to any of Claims 11 to 13, **characterized in that** the aqueous mixture comprising silicon dioxide used is produced by adding the hydrophilic silicon dioxide to an aqueous mixture at a rotational speed of at least 2000 rpm.

**15.** Process according to any of Claims 11 to 14, **characterized in that** the aqueous dispersion is stirred at 100-500 rpm (disc diameter 40 mm) during the addition of dialkoxysilane and for a further 15 minutes after the addition.

**16.** Process according to any of Claims 11 to 15, **characterized in that** the aqueous dispersion after addition of dialkoxysilane is matured at a temperature of 0 to 40°C for at least 24 hours.

## Revendications

**1.** Dispersion aqueuse contenant

a. 50 - 80 % en poids d'eau, de préférence 55 - 75 % en poids d'eau,
b. 10 - 30 % en poids, de préférence 15 - 25 % en poids de dioxyde de silicium hydrophile ayant une mouillabilité au méthanol de 0 % en volume de méthanol dans un mélange méthanol-eau,

c. 2 - 25 % en poids d'au moins un alcool alcoxylé de formule générale $R^1O((CH_2)_mO)_nH$, $R^1$ étant un radical alkyle ou alcényle ramifié ou non ramifié ayant 10 à 25 atomes de carbone, m = 2 ou 3 et n = 10 - 50,
d. 0,1 - 20 % en poids, de préférence 0,5 - 5 % en poids d'un silanol obtenu par hydrolyse d'au moins un dialcoxysilane de formule générale $R^2R^3Si(OR^4)_2$, $R^2$, $R^3$ et $R^4$ étant chacun un radical alkyle ou alcényle ramifié ou non ramifié ayant 1 à 25 atomes de carbone,
e. 0,5 - 4 % en poids, de préférence 1,5,0 - 4,0 % en poids et d'une manière particulièrement préférée 2,0 - 3,0 % en poids d'au moins une amine et/ou un amino-alcool ayant une masse moléculaire inférieure à 500 g/mol et
f. 0,1 - 20 % en poids d'au moins un copolymère de formule générale (I)

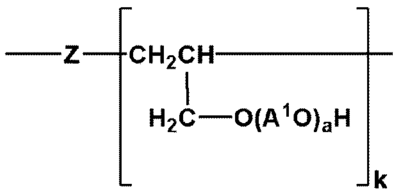

(I),

dans laquelle Z =

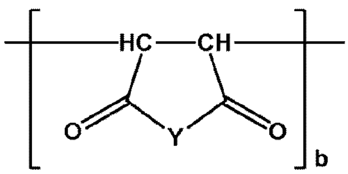

et/ou

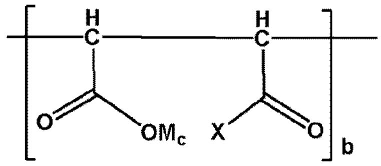

(Ia) (Ib)

dans laquelle

M = un hydrogène, un cation métallique mono- ou divalent, un ion ammonium, un radical amino organique,
c = 1 ou, dans le cas dans lequel M est un cation métallique divalent, c = 0,5
X = $-OM_c$ ou $-O-(C_pH_{2p}O)_q - R^5$, où
$R^5$ = H, un radical hydrocarboné aliphatique ayant 1 à 20 atomes de carbone, un radical hydrocarboné cycloaliphatique ayant 5 à 8 atomes de carbone, un radical aryle éventuellement substitué ayant 6 à 14 atomes de carbone,
p = 2 - 4, q = 0 - 100, $-NHR^6$ et/ou $-NR^6_2$ où $R^6 = R^5$ ou $-CO-NH_2$
Y = O, $NR^6$
$A^1$ = un radical éthylène, un radical propylène, un radical isopropylène, un radical butylène,
b = 10 - 30, a = 0 - 50, k = 10 - 30, la somme b + k étant dans la plage de 20 - 60,

g. 0,1 - 6,0 % en poids d'au moins un polyéthylèneglycol et/ou un polypropylèneglycol, toutes les indications de pourcentage en poids étant rapportées à la totalité de la masse de dispersion, et la dispersion présentant un pH < 11.

2. Dispersion selon la revendication 1, **caractérisée en ce qu'**elle présente un pH de 9 à < 11, d'une manière particulièrement préférée de 10 à < 11.

3. Dispersion selon la revendication 1 ou 2, **caractérisée en ce que** le dioxyde de silicium hydrophile présente une teneur en carbone < 0,1 %, mesurée à l'aide d'un analyseur de carbone : LECO CS 244 (LECO Corporation, St. Joseph, MI, 49085-2396, États-Unis).

4. Dispersion selon l'une des revendications 1 ou 3, **caractérisée en ce que** le dioxyde de silicium hydrophile présente une densité de groupes silanol de 1,5 - 2,7 groupes silanol/nm$^2$, mesurée par la méthode à l'alanate de lithium.

**5.** Dispersion selon l'une des revendications 1 à 4, **caractérisée en ce que** le silanol est un dialkyldisilanol de formule générale

$$R^2R^3Si(OH)_2$$

et/ou un $\alpha,\omega$-dihydroxydialkylsiloxane de formule générale

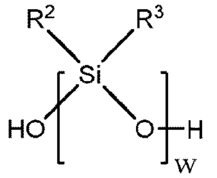

$R^2$ et $R^3$ étant chacun un radical alkyle ramifié ou non ramifié ayant 1 à 25 atomes de carbone, et w étant un nombre entier supérieur à 1.

**6.** Dispersion selon l'une des revendications 1 à 5, **caractérisée en ce que** le dioxyde de silicium hydrophile présente une granulométrie moyenne $d_{50}$ d'au plus 300 nm.

**7.** Dispersion selon l'une des revendications 1 à 6, **caractérisée en ce que** le dioxyde de silicium hydrophile est une silice pyrogénée ayant une aire BET de 30 à 410 $m^2/g$.

**8.** Dispersion selon l'une des revendications 1 à 7, **caractérisée en ce que** le rapport en moles du silanol au dioxyde de silicium est de 0,02 à 0,2.

**9.** Préparation de vernis contenant la dispersion selon l'une des revendications 1 à 8.

**10.** Utilisation de la dispersion selon l'une des revendications 1 à 8 en tant qu'additif à des agents garnissants Hydrofüller dans l'industrie automobile, en tant qu'additif dans des formulations à base aqueuse durcissables aux UV, dans les vernis transparents à l'eau, ainsi que dans les systèmes de revêtement pigmentés.

**11.** Procédé de fabrication d'une dispersion aqueuse contenant du dioxyde de silicium selon 1 à 8, comprenant l'addition d'au moins un dialcoxysilane de formule générale $R^2R^3Si(OR^4)_2$, dans laquelle $R^2$, $R^3$ et $R^4$ sont chacun un radical alkyle ou alcényle ramifié ou non ramifié ayant 1 à 25 atomes de carbone, à un mélange contenant 50 - 80 % en poids d'eau et 10 - 30 % en poids de dioxyde de silicium hydrophile, le pH de la dispersion étant < 11, de préférence de 9 à < 11, d'une manière particulièrement préférée de 10 à < 11, **caractérisé en ce que** la dispersion obtenue ne dépasse pas, pendant et après l'addition du dialcoxysilane, une température de 40 °C, d'une manière particulièrement préférée < 30 °C, tout spécialement < 25 °C.

**12.** Procédé selon l'une des revendications 11, **caractérisé en ce que** le dioxyde de silicium hydrophile utilisé est une silice pyrogénée ayant une aire BET de 30 à 410 $m^2/g$.

**13.** Procédé selon l'une des revendications 11 - 12, **caractérisé en ce que** le rapport en moles du dialcoxysilane utilisé au dioxyde de silicium utilisé est de 0,02 à 0,2.

**14.** Procédé selon l'une des revendications 11 à 13, **caractérisé en ce que** le mélange aqueux utilisé, contenant du dioxyde de silicium, est fabriqué par addition du dioxyde de silicium hydrophile à un mélange aqueux, pour une vitesse de rotation d'au moins 2000 tr/min.

**15.** Procédé selon l'une des revendications 11 à 14, **caractérisé en ce que** la dispersion aqueuse est agitée pendant l'addition du dialcoxysilane à 100 - 500 tr/min (diamètre du disque 40 mm), et encore pendant 15 nouvelles minutes après l'addition.

**16.** Procédé selon l'une des revendications 11 à 15, **caractérisé en ce que** la dispersion aqueuse subit, après l'addition du dialcoxysilane, une maturation pendant au moins 24 heures à une température de 0 à 40 °C.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2012062559 A1
- WO 2017009035 A1
- DE 102005012409 A1
- US 20080069753 A1
- WO 2011076518 A1


### In der Beschreibung aufgeführte Nicht-Patentliteratur


- *Journal of Colloid and Interface Science,* September 1988, vol. 125 (1), 62-63
- Lackharze, Chemie, Eigenschaften und Anwendungen. Hanser Verlag, 1996